# EUROPEAN PATENT SPECIFICATION

(11) **EP 0 895 884 B1**
(45) Date of publication and mention of the grant of the patent: **09.04.2003**
(21) Application number: 98101093.7
(22) Date of filing: 22.01.1998
(51) Int. Cl.: B60H 1/00

(54) **Air conditioner with subcondenser**
Klimaanlage mit Subverflüssiger
Climatisation avec subcondenseur

(30) Priority: 05.08.1997 JP 21055697
(43) Date of publication of application: 10.02.1999
(73) Proprietor: TGK CO., Ltd., Tokyo 193-0942 (JP); Calsonic Kansei Corporation, Tokyo (JP)
(72) Inventor: Hirota, Hisatoshi, Hachioji-shi, Tokyo (JP)
(74) Representative: Grünecker, Kinkeldey, Stockmair & Schwanhäusser Anwaltssozietät

(56) References cited:
- EP-A- 0 682 217
- US-A- 4 313 314
- US-A- 5 419 149
- PATENT ABSTRACTS OF JAPAN vol. 1997, no. 08, 29 August 1997 (1997-08-29) & JP 09 109669 A (CALSONIC CORP), 28 April 1997 (1997-04-28)
- BEERCHECK R C: "HYDRAULIC MANIFOLDS" MACHINE DESIGN,US,PENTON,INC. CLEVELAND, vol. 53, no. 9, 1 April 1981 (1981-04-01), pages 73-76, XP002027359 ISSN: 0024-9114

## Description

This invention relates to an air conditioner according to the preamble part of claim 1.

In a known conventional air conditioner for a car, a refrigerating cycle is used for cooling and heated engine water is used for heating. However, e.g. in an electric car, there is no engine defining a powerful heat generating source for heating purposes, so it is necessary to heat by using the refrigerating cycle. A heat pump uses a heat exchanger which serves as an evaporator for the cooling mode by reversing refrigerant flow. The heat pump is not suitable for a car use because a four-way valve has to be rotated in order to switch between the flow paths. An air conditioner is also known having a sub-condenser installed at the position near the passenger compartment of a car, and being equipped with an evaporator in addition to a main condenser installed at the position not connected to the passenger compartment. A bypass flow path is provided for refrigerant not passing the main condenser, as well as a refrigerant returning flow path to return refrigerant from the main condenser to the area between the evaporator and a compressor. By applying these structures, refrigerant can only flow into the sub-condenser but not into the main condenser. Refrigerant accumulated in the main condenser can flow out through the refrigerant returning flow path, Said mode of operation results in car passenger compartment heating by the sub-condenser. However, the structures mentioned require a total of four T-shaped connections because both ends of the bypass flow path and both ends of the refrigerant returning flow path have to be connected to the refrigerant main flow piping. This connecting principle is disadvantageous because the piping structure is difficult to arrange, cannot be arranged neatly, and needs troublesome piping works and costly pipings and piping accessories.

JP-0910669-A discloses an air conditioner comprising a main condenser, a sub-condenser, and a refrigerant bypass flow path for bypassing the main condenser during heating mode operation. Several solenoid valves are incorporated into a multiple ways valve block located at a junction of the refrigerant main pipe and the bypass flow path. Check valves are located in the bypass flow path and the refrigerant main pipe and the bypass flow path upstream a junction of both. Said valves are distributed separately along the respective flow paths resulting in complicated pipings and piping accessories.

US-A-4,313,314 discloses a heat pump/air conditioning converter apparatus including a block-shaped structural unit consisting of several blocks in a sandwiched configuration with in-built flow paths and valves.

It is an object of the invention to provide, as a heating system equipped with a sub-condenser, a compact, space-saving air conditioner and to simplify or even avoid complicated piping structures and related piping work and to allow its simple installation in an electric car, etc.

To achieve the above purpose in the air conditioner with the sub-condenser, the main condenser is installed at a position without connection to the car passenger compartment, the sub-condenser is installed at a position downstream of the main condenser such that it is connected to the car passenger compartment. The refrigerant is circulated in the refrigerant main flow pipe in the refrigerating cycle and is compressed by the compressor, is condensed by the condenser, and is expanded adiabatically to evaporate in the evaporator, and then is returned to the compressor. The bypass flow path, the refrigerant returning flow path, a connection between both flow paths and the refrigerant main flow pipe, and plural solenoid valves and plural check valves to control connecting states of the both flow paths to the said refrigerant main flow pipe are installed into one block unit. This allows to simplify the piping, to avoid complicated structures like T-connectors, and gives space for simple piping work. The air conditioner can easily be installed in an electric car or at other facilities. In the block unit plural solenoid valve mounting holes intended to receive the plural solenoid valves are drilled in the same direction, and plural check valve mounting holes intended to receive the plural check valves are drilled in the same direction, while refrigerant passing holes to pass refrigerant are drilled perpendicular to the said both mounting hole groups. The said flow paths and connections are defined by these holes drilled into the block.

In addition, the solenoid valves may include a solenoid valve to open/shut the inlet flow path to the said main condenser, a further solenoid valve to open/shut the said bypass flow path, and a further solenoid valve to open/shut the said refrigerant returning flow path.

The said plural check valves may include a check valve installed at the bypass flow path, a check valve installed at the refrigerant main flow pipe downstream the outlet of the main condenser, a check valve installed at the refrigerant returning flow path, and a check valve installed at the refrigerant main flow pipe downstream of the outlet of the evaporator.

Referring to the drawings, embodiments of the invention are described. In the drawings are:
- Fig. 1:: a horizontal cross-sectional view of a part of a block, equipped with valves,
- Fig. 2:: a plan view of the part of the block of Fig. 1,
- Fig. 3:: a vertical cross-sectional view of a solenoid valve,
- Fig. 4:: a vertical cross-sectional view of transient from closed state to open state of the solenoid valve of Fig. 3,
- Fig. 5:: a vertical cross-sectional view of the closed solenoid valve of Fig. 3,
- Fig. 6:: a schematic piping scheme of an embodiment of a car air conditioner at cooling state of the refrigerating cycle,
- Fig. 7:: a schematic piping scheme at heating state of the refrigerating cycle, and
- Fig. 8:: a schematic piping scheme showing the refrigerating cycle with an actual layout.

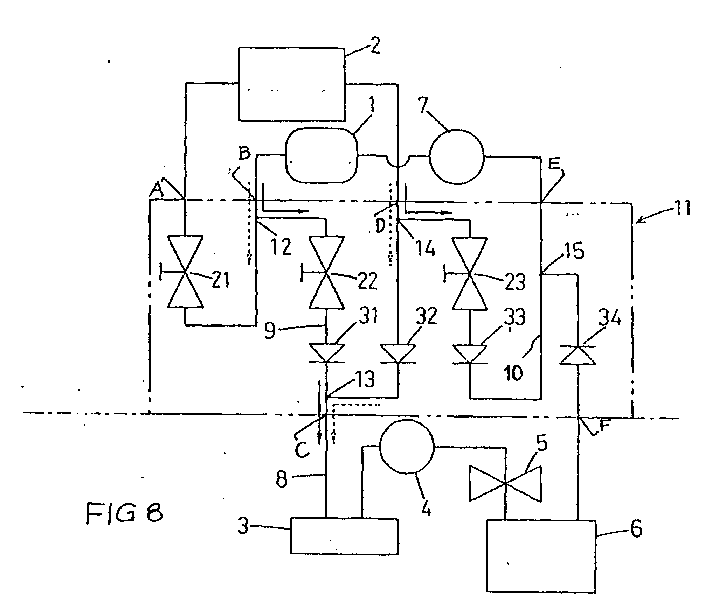

A car air conditioner as shown in Figs. 6, 7, and 8 includes a compressor 1, a main condenser 2 installed at a position without connection to a car passenger compartment (not shown), a sub-condenser 3 installed at a position connected to the car passenger compartment, a liquid tank 4, a temperature regulating expansion valve 5, an evaporator 6 installed at a position connected to the car passenger compartment with the sub-condenser 3, an accumulator 7, and a refrigerant main flow pipe 8 in which a refrigerant agent can pass and circulate.

A bypass flow path 9 for refrigerant not passing the main condenser 2 is connected to the refrigerant main flow pipe 8 at a first connection 12 located between the output of the compressor 1 and the inlet of the main condenser 2, and at a second connection 13 located between the outlet of the main condenser 2 and the inlet of the sub-condenser 3. A refrigerant returning flow path 10 to return refrigerant accumulated at the main condenser 2 to the compressor 1 is connected to the refrigerant main flow pipe 8 at a third connection 14 located at the outlet of the main condenser 2, and at a fourth connection 15 located between the outlet of the evaporator 6 and the inlet of the accumulator 7.

At the inlet of the main condenser 2, a first solenoid valve 21 to open/shut the refrigerant main flow pipe 8 is installed. A second solenoid valve 22 to open/shut the bypass flow path 9 is located at the midway of the bypass flow path 9. A third solenoid valve 23 is located between main flow pipe 8 and flow path 10 to open/shut the refrigerant returning flow path 10.

Between the second and third connections 13 and 14 on the way of the bypass flow path 9 and at the refrigerant main flow pipe 8 downstream of the outlet of the main condenser 2 a second check valve 32 is installed. Between connections 13 and 12 a first check valve 31 is located. Both check valves 31,32 serve to pass the refrigerant from upstream to downstream only.

On the way of the refrigerant returning flow path 10, a third check valve 33 is installed between connections 14,15 to pass refrigerant from the outlet of the main condenser 2 to only upstream of the accumulator 7. At the refrigerant main flow pipe 8 (upstream of connection 15 at the refrigerant returning flow path 10) and downstream of the outlet of the evaporator 6, a fourth check valve 34 is installed to pass the refrigerant from upstream to downstream only.

With this general configuration, at cooling operation as shown in Fig. 6 the refrigerant circulates through the main condenser 2, but does not pass the bypass flow path 9, since the first solenoid valve 21 is open, the second solenoid valve 22 is closed and the third solenoid valve 23 is closed as well, in order to cool the car passenger compartment by heat exchanging to atmosphere at the evaporator 6. There is a little heating by heat exchanging to atmosphere at the sub-condenser 3, but the sub-condenser 3 is smaller compared with the main condenser 2, such that the amount of heat exchange is much smaller than that to atmosphere at the evaporator 6.

On the other hand, at heating operation as shown in Fig. 7, the refrigerant circulates the bypass flow path 9 without passing the main condenser 2, since the first solenoid valve 21 is closed, the second solenoid valve 22 is opened, in order to exchange heat to atmosphere at the sub-condenser 3 and at the evaporator 6.

The refrigerant accumulated in the main condenser 2 is returned to the refrigerant main flow pipe 8 via the refrigerant returning flow path 10. As a result, nearly the total amount of refrigerant circulates in the refrigerant main flow pipe 8 through the bypass flow path 9. At that time, compared to the amount of heat exchanged to atmosphere at the evaporator 6, the amount of heat exchanged to atmosphere at the sub-condenser 3 is larger than the amount of heat generated at the compressor 1, resulting in heating the car passenger compartment. At the evaporator 6 moisture is removed for comfortable heating with less humidity.

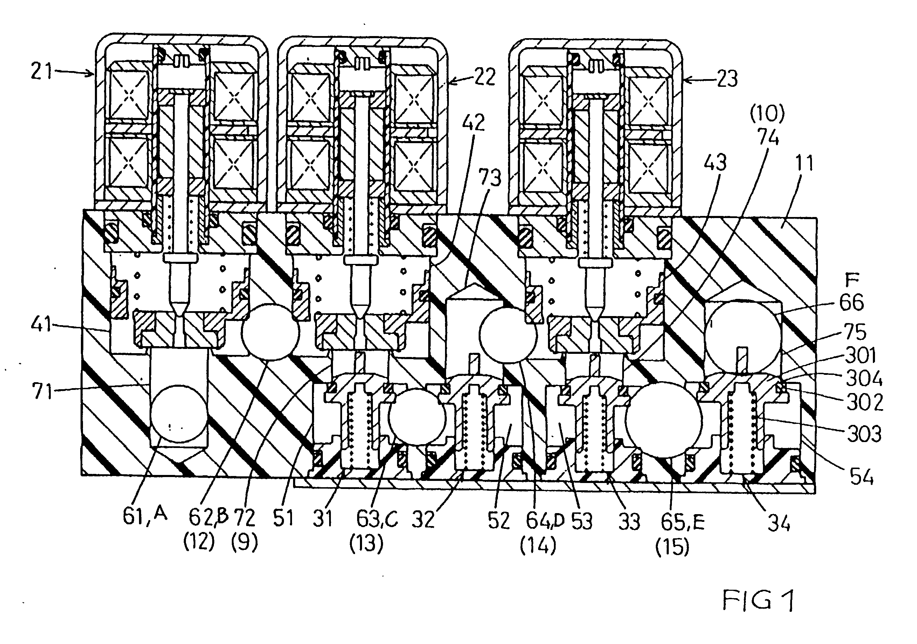

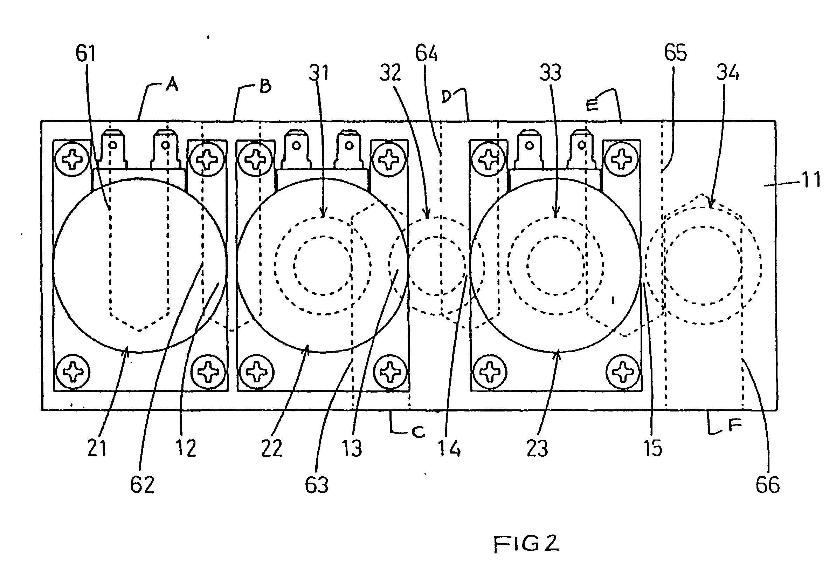

In an equipment actually applied, a block 11 (indicated in Figs. 6, 7, and 8 in dash-dotted lines, more clearly shown in Figs. 1-5) is equipped with installed parts and piping structures. Said fully equipped block 11 defines one structural unit, comprising the bypass flow path 9, the refrigerant returning flow path 10, the four connections 12, 13, 14, and 15, the first to third solenoid valves 21, 22, and 23, and the first to fourth check valves 31, 32, 33, and 34.

The block 11 is a rectangular parallelepiped at one side of which (upper side in Fig. 1) three holes 41, 42, and 43 to install solenoid valves are drilled in parallel. The first solenoid valve 21 is installed at the first solenoid mounting hole 41, the second solenoid valve 22 is installed at the second solenoid mounting hole 42, and the third solenoid valve 23 is installed at the third solenoid mounting hole 43.

At the side opposite to said one side of the block 11 (at the lower side in Fig. 1), four holes 51, 52, 53 and 54 to install check valves are drilled in parallel. The first check valve 31 is installed in the first check valve mounting hole 51, the second check valve 32 is installed in the second check valve mounting hole 52, the third check valve 33 is installed in the third check valve mounting hole 53, and the fourth check valve 34 is installed at the fourth check valve mounting hole 54.

In the first solenoid mounting hole 41, the second check valve mounting hole 52 and the fourth check valve mounting hole 54, blind holes 71, 73, and 75 are drilled extending along the respective hole axes. The oppositely located second solenoid valve mounting hole 42 and the first check valve mounting hole 51 are mutually aligned with their axes and are connected with each other by a coaxial penetration hole 72. The oppositely located third solenoid valve mounting hole 43 and the third check valve mounting hole 53 are mutually aligned with their axes and are connected with each other by a coaxial penetration hole 74.

From a further third side (situated between the upper and lower block sides in Fig. 1) of the block 11, a first refrigerant passing hole 61 is drilled at a position such that is connected to the blind hole 71 which continues the first solenoid valve mounting hole 41. A second refrigerant passing hole 62 is drilled from the same further block side at a middle position such that it is intersecting the side wall of the first solenoid valve mounting hole 41 as well as the side wall of the second solenoid valve mounting hole 42. A third refrigerant passing hole 63 is drilled into the fourth block side at a middle position such that it is intersecting the side wall of the first check valve mounting hole 51 as well as the side wall of the second check valve mounting hole 52. A fourth refrigerant passing hole 64 is drilled at the third block side at a middle position such that it is intersecting the side wall of the third solenoid valve mounting hole 43 as well as the side wall of the blind hole 73 which continues the second check valve mounting hole 52. A fifth refrigerant passing hole 65 is drilled at the third block side in a middle position such that it is intersecting the side wall of the third check valve mounting hole 53 and the side wall of the fourth check valve mounting hole 54. A sixth refrigerant passing hole 66 is drilled into the fourth block side at a position such that it is connected to the blind hole 75 continuing the fourth check valve mounting hole 54.

In this embodiment, the parallel first, second, fourth and fifth refrigerant passing holes 61, 62, 64, and 65 are drilled in.the same direction into the third block side, and third and sixth refrigerant passing holes 63 and 66 are drilled with opposite direction into the fourth block side. These holes could, however, be drilled in either direction. Even all holes could be drilled in the same direction.

The refrigerant passing holes 61 through 66 are all blind holes not penetrating the block 11. An opening A of the first refrigerant passing hole 61 is connected to the inlet of the main condenser 2. An opening B of the second refrigerant passing hole 62 is connected to the outlet of the compressor 1. An opening C of the third refrigerant passing hole 63 is connected to the inlet of the sub-condenser 3. An opening D of the fourth refrigerant passing hole 64 is connected to the outlet of the main condenser 2. An opening E of the fifth refrigerant passing hole (5) is connected to the inlet of the accumulator 7. An opening F of the sixth refrigerant passing hole 66 is connected to the outlet of the evaporator 6.

As a result, the connection between the first solenoid valve mounting hole 41 of the refrigerant passing hole 62 and the second solenoid valve mounting hole 42 forms connection 12. The connection between the first check valve mounting hole 51 of the third refrigerant passing hole 63 and the second check valve mounting hole 52 forms connection 13. The connection between the blind hole 73 connected to the second check valve mounting hole 52 of the fourth refrigerant passing hole 64 and the third solenoid valve mounting hole 43 forms connection 14. The connection between the third check valve mounting hole 53 of the forth refrigerant passing hole 65 and the fourth check valve mounting hole 54 forms connection 15.

Penetration hole 72 connecting the second solenoid valve mounting hole 42 and the first check valve mounting hole 51 forms bypass flow path 9. Penetration hole 74 connecting the third solenoid valve mounting hole 43 and the third check valve mounting hole 53 forms the refrigerant returning flow path 10. By this means, drilling holes in four (or three) directions into the block 11 are needed only which easily form the bypass flow path 9, refrigerant returning flow path 10 and the four connections 12, 13, 14, and 15. Simple manufacturing and preparation of the raw block 11 then is achieved.

The check valves 31 through 34 have the same structure. A ring seal part 302 is mounted to a peripheral part of a valve body 301 (a poppet valve body). Valve body 301 is pressed against a valve seat 304 by a compression spring 303 from the downstream side to the upstream side. As a result, the refrigerant flow from downstream to upstream normally is completely blocked. The refrigerant only can flow as soon as the pressure difference between the upstream and downstream sides exceeds the applied force of spring 303.

The solenoid valves 21 through 23 have the same structure. By reversing the flow of the electric current to the solenoid 201 and 202 the valve will open/shut. Each valve is a self-keeping pilot type solenoid valve keeping the existing state even after the current is shut, i.e., is designed to maintain automatically the open or the closed position after the current is shut-off, and needs a reversal of the electric flow to switch from one state to the other.

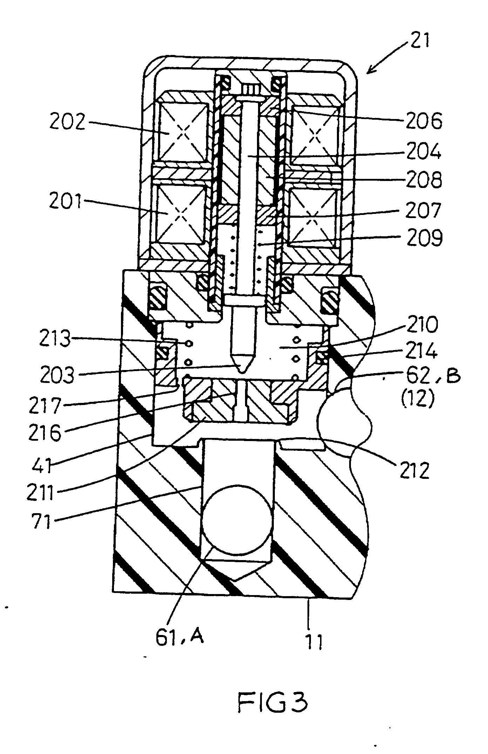

Fig. 3 shows an open state of the first solenoid valve 21. In two magnetic coils 201 and 202, connected in series, a coil is wound in the same direction. A pilot valve body 203 is located at the tip of moving rod 204 which is arranged for free displacement in axial direction. A cylindrical permanent magnet 208 with iron rings 206 and 207 at both ends is loosely inserted at rod 204. The permanent magnet 208 can move freely in the axial direction with the iron rings 206 and 207 on rod 204 and is pressed towards the upper base end of the moving rod 204 by a compression spring 209 with weaker force than the thrust force of the solenoid valve 21 upon actuation. Spring 209 is seated on a land of rod 204.

A main valve body 211, controlled by pilot valve assembly 203, 216, is provided for cooperation with valve seat 212 formed in the way between refrigerant flow paths 61 and 62. Main valve body 211 is actuated by a second compression coil spring 213 in the direction from the solenoids 201, 202 onto the valve seat 212. Spring 213 is seated against a lower side of a solenoid fixture. At the upper side of the main valve body 211, facing rod 204, a pilot chamber 210 is confined also by a bulkhead of the main valve body 211. A sealing element 214 is installed at the periphery of the bulkhead of the main valve body 211 to seal between pilot chamber 210 and the refrigerant flow path 61 and 62. The main valve body 211 with its bulkhead is axially moveable in relation to main seat 212. In main valve body 211, a pilot hole 216 is drilled forming a passage and pilot valve seat for pilot valve body 203. A narrow leak hole 217 is, e.g., provided at an outer position of the main valve body 211.

At a state in which the pilot valve body 203 is off-seated as shown in Fig. 3, the pressure inside pilot chamber 210 reaches the same as that in the refrigerant flow path 61 at lower pressure side by passing through pilot hole 216. This keeps the main valve body 211 off-seated by the pressure difference to the high pressure refrigerant outside the valve seat 212.

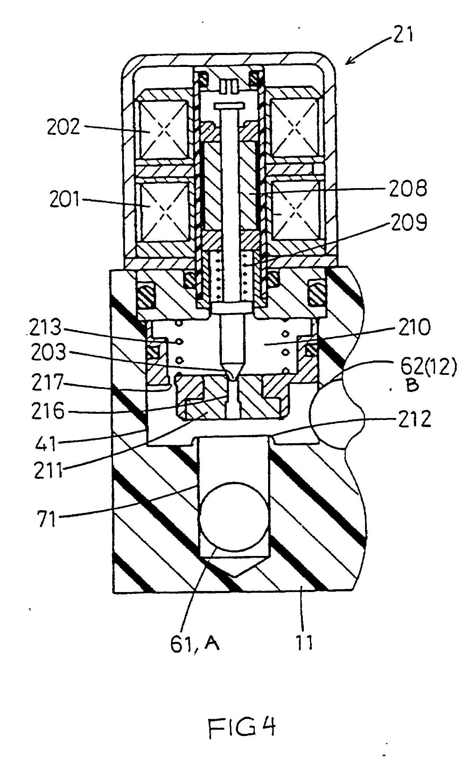

As shown in Fig. 4, electrically actuating the magnetic coils 201 and 202 results in blocking the pilot hole 216 by pilot valve body 203. The permanent magnet 208 moves in a movement to the specified position and pushes rod 204 downwardly via spring 209. However, the pilot valve 203 only touches the main valve body 211 for closing pilot hole 216. The weak coil spring 209 is kept compressed while the main valve body 211 still is off-seated.

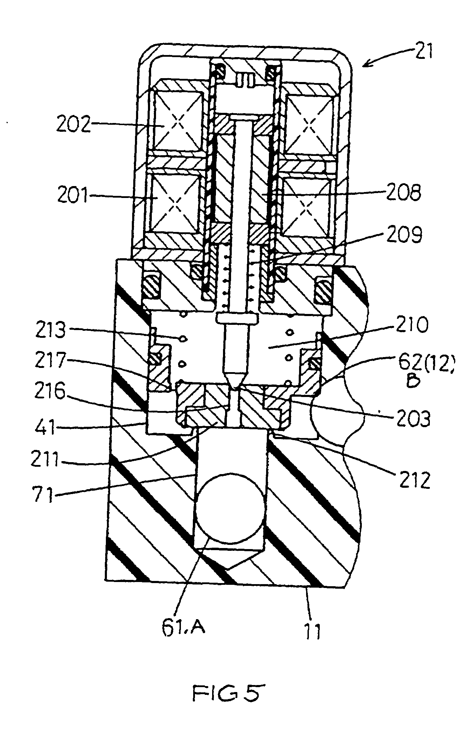

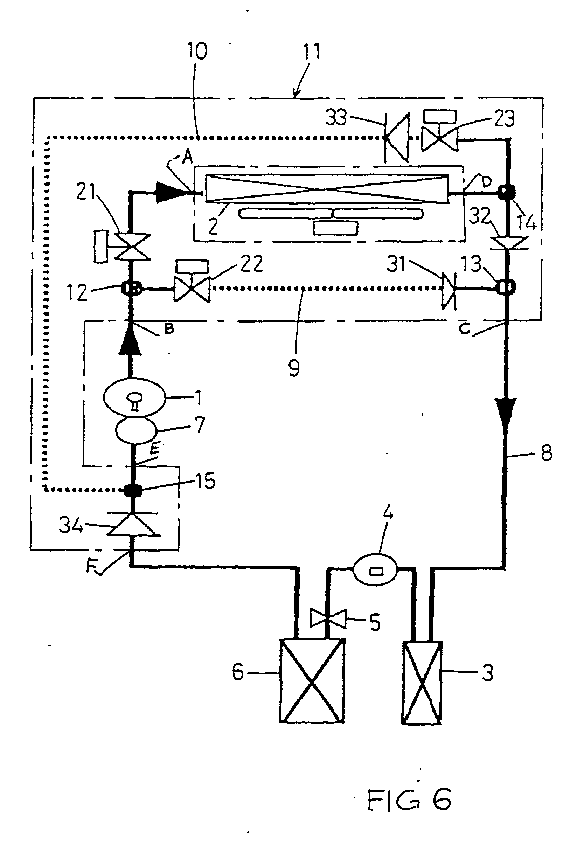

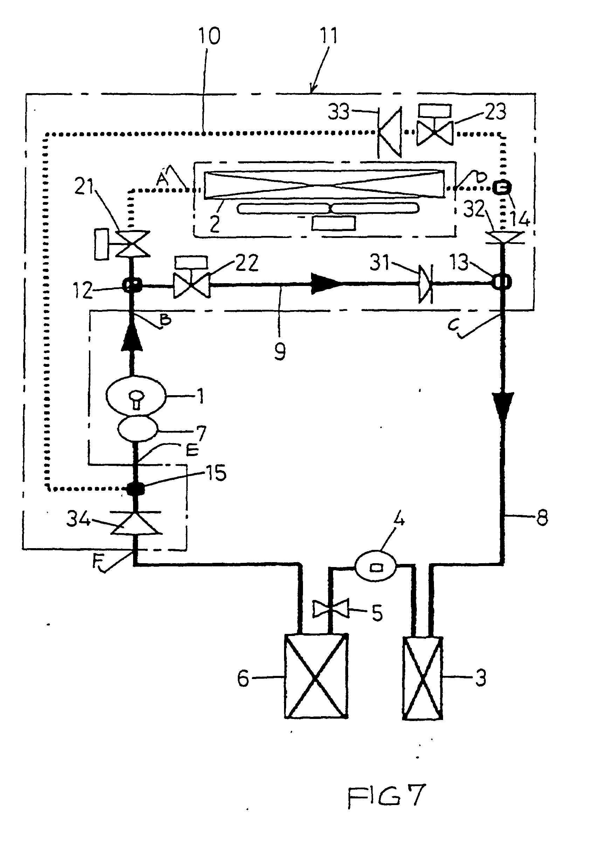

With the time passing, pressure inside pilot chamber 210 increases by high pressure refrigerant passing leak hole 217 and the main valve 211 as shown in Fig. 5 becomes pressed onto valve seat 212 to separate the refrigerant flow paths 61 and 62. Rod 204 follows said movement and keeps hole 216 closed.

Since the bypass flow path, the refrigerant returning flow path, the connection between both flow paths and the refrigerant main flow pipe, as well as plural solenoid valves and plural check valves to control passing state in both flow paths to the refrigerant main flow pipe are installed and provided in one block belonging to the heating system accompanied with the sub-condenser, the piping structure is simplified and complicated structures are avoided. This gives free installation space for piping work. Particularly, the block can be easily installed at an electric vehicle or other facilities.

More specifically, in the block locally concentrating structural component parts and flow paths, plural solenoid valve mounting holes to install plural solenoid valves can be drilled with the same direction, as well as plural check valve mounting holes to install plural check valves from the opposite side can be drilled with the same direction. Advantageously, the refrigerant passing holes to pass refrigerant can be drilled perpendicular to both mounting hole groups. These latter holes drilled in the block form the necessary flow paths and also all connections to simplify piping structures and piping works.

## Claims

1. Air conditioner, particularly for a motor vehicle, including a compressor (1) arranged in a refrigerant main pipe (8), a condenser assembly consisting of a main condenser (2) downstream of said compressor (1) and of a sub-condenser (3) downstream of said main condenser (2), an expansion valve (5) and an evaporator (6) upstream said compressor (1), a refrigerant bypass flow path (9) bypassing said main condenser (2), said sub-condenser (3) being arranged for heating a passenger compartment, and valve means including solenoid valves and check valves located in the flow paths for controlling the refrigerant flow for each of the different refrigerant flow configurations
**characterized in that**
a plurality of flow paths and flow path interconnections defining different refrigerating flow configurations for respective cooling and heating operating states of the air conditioner are incorporated into a structural unit formed as a block (11) having mounting holes (41,42,43, 51,52,53,54), internal connecting passages (71,72,73,74,75) and internal flow passages (61,62,63,64,65,66), said mounting holes and said internal flow passages each forming an opening at at least one of the exterior sides of said block (11), that said solenoid valves (21,22,23) and said check valves (31,32,33,34) are mounted through said openings into said mounting holes of said block with said openings formed by said internal flow passages (61-66) defining refrigerant communication ports (A,B,C,D,E,F), and that said internal connecting passages (71-75) form a refrigerant return flow path (10) connected between an outlet of the main condenser (2) and an upstream inlet of said compressor (1) and also form said refrigerant bypass flow path (9).

2. Air conditioner as in claim 1,
**characterized in that**
the block (11) has the shape of a rectangular parallelepiped having exterior sides, that said openings of the solenoid valve mounting holes (41-43) are commonly located in one of the exterior sides of the block (11), that said openings of the check valve mounting holes (51-54) are commonly located in another of the exterior sides of the block (11), and that the openings (A-F) of the internal flow passages (61-66) are either commonly located in a further of the exterior sides or are distributed to two opposite sides of the further exterior sides.

3. Air conditioner as in claim 2,
**characterized in that**
said mounting holes (41-43,51-54) are oriented with their hole axes parallel to each other and perpendicular to the respective associated exterior block side, and that the internal flow passages (61-66) are holes drilled with mutual parallel hole axes perpendicular to the respective associated other exterior block side.

4. Air conditioner as in claim 1,
**characterized in that**
of said internal connecting passages (72,74) each one extends between a solenoid valve mounting hole (42,43) and an associated check valve mounting hole (51,53), said solenoid valve mounting hole and said check valve mounting hole facing another and being formed in oppositely located exterior sides of the block (11).

5. Air conditioner as in claim 1,
**characterized in that**
the internal flow passages (61-66) are blind holes oriented perpendicular with respect to the orientation of the axes of the mounting holes, each blind hole intersecting either at least one of the mounting holes or one of the internal connecting passages.

6. Air conditioner as in claim 1,
**characterized in that**
said solenoid valve mounting holes (41-43) are drilled into the block (11) in the same direction and with parallel orientation of their hole axes from a first exterior side of the block (11), that the check valve mounting holes (51-54) are drilled in the same direction and with parallel orientation of their hole axes from another exterior side of said block (11) opposite to the first exterior side, and that refrigerant passing holes defining said internal flow passages (61-66) are drilled perpendicularly to the said both mounting holes and interconnect said flow paths and said connections inside said block (11).

7. Air conditioner as in claim 1,
**characterized in that**
between the refrigerant return flow path (10) and the main refrigerant pipe (8) and between the refrigerant bypass flow path (9) and the main refrigerant pipe (8) connections (12,13,14,15) are formed within said block (11) by the respective common intersections between one (62,63,64,65) of the internal flow passages (61-66) and either two adjacent mounting holes (41,42;51,52;53,54) or a mounting hole (43) and an adjacent internal connecting passage (73).

8. Air conditioner as in claim 1,
**characterized in that**
said solenoid valves (21-23) include a solenoid valve (21) to open/shut the main refrigerant pipe (8) upstream of the main condenser (2), a solenoid valve (22) to open/shut the bypass flow path (9), and a solenoid valve (23) to connect/separate the refrigerant return flow path (10) and the refrigerant main pipe (8).

9. Air conditioner as in claim 1,
**characterized in that**
said check valves (31-34) include a check valve (31) installed in the refrigerant bypass flow path (9), a check valve (32) installed in the refrigerant main flow pipe (8) close to a downstream outlet of the main condenser (2), a check valve (33) installed in said refrigerant return flow path (10) and a check valve (34) installed in the refrigerant main flow pipe (8) close to a downstream outlet of the evaporator (6).

## Patentansprüche

1. Klimaanlage, insbesondere für ein Kraftfahrzeug, umfassend einen Kompressor (1), angeordnet in einer Kältemittel-Hauptströmungsrohrleitung (8), eine Kondensiereranordnung, bestehend aus einem Hauptkondensierer (2) ausströmseitig des Kompressors (1) und einem Subkondensierer (3) ausströmseitig des Hauptkondensierers (2), ein Expansionsventil (5) und einen Verdampfer (6) einströmseitig des Kompressors (1), einen Kältemittel-Bypass-Strömungsweg (9), der an dem Hauptkondensierer (2) im Bypass vorbeiführt, wobei der Subkondensierer (3) zum Heizen eines Fahrgastraums angeordnet ist, und eine Ventileinrichtung, umfassend Solenoidventile und Absperrventile, angeordnet in den Strömungswegen zum Kontrollieren des Kältemittelflusses von jeder der unterschiedlichen Kältemittel-Strömungskonfigurationen,
**dadurch gekennzeichnet,**
**dass** eine Vielzahl von Strömungswegen und Strömungsweg-Zwischenverbindungen, die unterschiedliche Kältemittel-Strömungskonfigurationen für jeweilige Kühl- und Heizbetriebszustände der Klimaanlage definieren, in einer strukturellen Einheit, gebildet als ein Block 11, eingeschlossen sind, mit Befestigungslöchern (41, 42, 43, 51, 52, 53, 54), inneren Verbindungsdurchgangswegen (71, 72, 73, 74, 75) und inneren Strömungsdurchgangswegen (61, 62, 63, 64, 65, 66), wobei die Befestigungslöcher und die inneren Strömungsdurchgangswege jeweils eine Öffnung an zumindest einer der Außenseiten des Blocks (11) bilden, dass die Solenoidventile (21, 22, 23) und die Absperrventile (31, 32, 33, 34) durch die Öffnungen hindurch in die Befestigungslöcher des Blocks hinein befestigt sind, wobei die Öffnungen, gebildet durch die inneren Strömungsdurchgangswege (61-66), Kältemittel-Kommunikationsöffnungen (A, B, C, D, E, F) definieren, und dass die inneren Verbindungsdurchgangswege (71-75) einen Kältemittel-Rückführströmungsweg (10) bilden, verbunden zwischen einem Auslass des Hauptkondensierers (2) und einem einströmseitigen Einlass des Kompressors (1), und auch den Kältemittel-Bypass-Strömungsweg (9) bilden.

2. Klimaanlage nach Anspruch 1,
**dadurch gekennzeichnet,**
**dass** der Block (11) die Form eines rechtwinkligen Parallelepipeds besitzt, der Außenseiten besitzt, dass die Öffnungen der Solenoidventil-Befestigungslöcher (41-43) gemeinsam in einer der Außenseiten des Blocks (11) angeordnet sind, dass die Öffnungen der Absperrventil-Befestigungslöcher (51-54) gemeinsam in einer anderen der Außenseiten des Blocks (11) angeordnet sind, und dass die Öffnungen (A-F) der inneren Strömungsdurchgangswege (61-66) entweder gemeinsam in einer weiteren der Außenseiten angeordnet sind oder auf zwei gegenüberliegende Seiten der weiteren Außenseiten verteilt sind.

3. Klimaanlage nach Anspruch 2,
**dadurch gekennzeichnet,**
**dass** die Befestigungslöcher (41-43, 51-54) mit deren Lochachsen parallel zueinander und senkrecht zu der jeweiligen, zugeordneten Außenblockseite orientiert sind, und dass die inneren Strömungsdurchgangswege (61-66) Löcher sind, die mit zueinander parallelen Lochachsen senkrecht zu der jeweiligen, zugeordneten, anderen Außenblockseite gebohrt sind.

4. Klimaanlage nach Anspruch 1,
**dadurch gekennzeichnet,**
**dass** sich die inneren Verbindungsdurchgangswege (72, 74) jeweils zwischen einem Solenoidventil-Befestigungsloch (42, 43) und einem zugeordneten Absperrventil-Befestigungsloch (51, 53) erstrecken, wobei das Solenoidventil-Befestigungsloch und das Absperrventil-Befestigungsloch zueinander hinweisen und in gegenüberliegend angeordneten Außenseiten des Blocks (11) gebildet sind.

5. Klimaanlage nach Anspruch 1,
**dadurch gekennzeichnet,**
**dass** die inneren Strömungsdurchgangswege (61-66) Blindlöcher sind, orientiert senkrecht in Bezug auf die Orientierung der Achsen der Befestigungslöcher, wobei jedes Blindloch entweder mindestens eines der Befestigungslöcher oder einen der inneren Verbindungsdurchgangswege schneidet.

6. Klimaanlage nach Anspruch 1,
**dadurch gekennzeichnet,**
**dass** die Solenoidventil-Befestigungslöcher (41-43) in den Block (11) hinein in derselben Richtung und mit paralleler Orientierung deren Lochachsen von einer ersten Außenseite des Blocks (11) aus gebohrt sind, dass die Absperrventil-Befestigungslöcher (51-54) in derselben Richtung und mit paralleler Orientierung deren Lochachsen von einer anderen Außenseite des Blocks (11) gegenüberliegend der ersten Außenseite gebohrt sind, und dass Kältemittel-Durchgangslöcher, die die inneren Strömungsdurchgangswege (61-66) definieren, senkrecht zu den beiden Befestigungslöchern gebohrt sind und die Strömungswege und die Verbindungen innerhalb des Blocks (11) miteinander verbinden.

7. Klimaanlage nach Anspruch 1,
**dadurch gekennzeichnet,**
**dass** zwischen dem Kältemittel-Rückführströmungsweg (10) und der Hauptkältemittel-Rohrleitung (8) und zwischen dem Kältemittel-Bypass-Strömungsweg (9) und der Hauptkältemittel-Rohrleitung (8) Verbindungen (12, 13, 14, 15) innerhalb des Blocks (11) durch die jeweiligen, gemeinsamen Schnitte zwischen einem (62, 63, 64, 65) der inneren Strömungsdurchgangswege (61-66) und entweder zwei angrenzenden Befestigungslöchern (41, 42; 51, 52; 53, 54) oder einem Befestigungsloch (43) und einem angrenzenden, inneren Verbindungsdurchgangsweg (73) gebildet sind.

8. Klimaanlage nach Anspruch 1,
**dadurch gekennzeichnet,**
**dass** die Solenoidventile (21-23) ein Solenoidventil (21), um die Hauptkältemittel-Strömungsrohrleitung (8) einströmseitig des Hauptkondensierers (2) zu öffnen/zu schließen, ein Solenoidventil (22), um den Bypass-Strömungsweg (9) zu öffnen/zu schließen, und ein Solenoidventil (23), um den Kältemittel-Rückführströmungsweg (10) und die Kältemittel-Hauptrohrleitung (8) zu verbinden/zu separieren, umfassen.

9. Klimaanlage nach Anspruch 1,
**dadurch gekennzeichnet,**
**dass** Absperrventile (31-34) ein Absperrventil (31), installiert in dem Kältemittel-Bypass-Strömungsweg (9), ein Absperrventil (32), installiert in der Kältemittel-Hauptrohrleitung (8) nahe zu einem ausströmseitigen Auslass des Hauptkondensierers (2), ein Absperrventil (33), installiert in dem Kältemittel-Rückführströmungsweg (10), und ein Absperrventil (34), installiert in der Kältemittel-Hauptströmungsrohrleitung (8) nahe einem ausströmseitigen Auslass des Verdampfers (6), umfassen.

## Revendications

1. Climatiseur, destiné en particulier à un véhicule à moteur, comprenant un compresseur (1) disposé dans un tube de réfrigération principal (8), un ensemble de condenseur se composant d'un condenseur principal (2) situé en aval dudit compresseur (1) et d'un sous-condenseur (3) situé en aval dudit condenseur principal (2), d'un clapet de détente (5) et d'un évaporateur (6) situés en amont dudit compresseur (1) ; un passage de fluide de réfrigération en dérivation (9) passant en dérivation dans ledit condenseur principal (2), ledit sous-condenseur (3) étant aménagé de manière à chauffer un compartiment de passager, et des moyens de clapet comprenant des vannes à solénoïde et des clapets anti-retour étant situés dans les passages de flux afin de commander le flux de réfrigération pour chacune des différentes configurations de flux de réfrigération ;
**caractérisé en ce que** :
une pluralité de passages de flux et d'interconnexions de passages de flux définissant différentes configurations de flux de réfrigération destinés à fournir des états respectifs de fonctionnement de chauffage et de refroidissement du climatiseur sont incorporées dans uns structure unitaire formée en tant que bloc (11) comportant des trous de montage (41, 42, 43, 51, 52, 53, 54), des passages de connexion interne (71,72, 73, 74, 75) et des passages de flux internes (61, 62, 63, 64, 65, 66), lesdits trous de montage et lesdits passages de flux internes formant une ouverture sur au moins l'un des côtés extérieurs dudit bloc (11), **en ce que** lesdites vannes à solénoïde (21, 22, 23) et lesdits clapets anti-retour (31, 32, 33, 34) sont montés au travers lesdites ouvertures aménagées dans lesdits trous de montage dudit bloc, lesdites ouvertures étant formées par lesdits passages de flux internes (61 à 66) qui définissent des orifices de communication de réfrigération (A, B, C, D, E, F), et **en ce que** lesdits passages de connexion interne (71 à 75) forment un passage de flux de réfrigération en retour (10) connecté entre une sortie du condenseur principal (2) et une admission située en amont dudit compresseur (1) et forment également ledit passage de fluide de réfrigération en dérivation (9).

2. Climatiseur selon la revendication 1,
**caractérisé en ce que** le bloc (11) a une forme de parallélépipède rectangulaire comportant des côtés extérieurs, **en ce que** lesdites ouvertures des trous de montage des vannes à solénoïde (41 à 43) sont disposés en commun sur l'un dès côtés extérieurs du bloc (11), **en ce que** lesdites ouvertures des trous de montage des clapets anti-retour (51 à 54) sont disposées en commun sur l'autre des côtés extérieurs du bloc (11), et **en ce que** les ouvertures (A à F) des passages de flux internes (61 à 66) sont disposées soit en commun dans un autre des côtés extérieurs, soit réparties sur les deux côtés opposés des autres côtés extérieurs.

3. Climatiseur selon la revendication 2,
**caractérisé en ce que** lesdits trous de montage (41 à 43, 51 à 54) sont orientés de telle sorte que leurs axes d'orifice sont parallèles les uns par rapport aux autres et perpendiculaires par rapport au côté du bloc extérieur associé respectif, et **en ce que** les passages de flux internes (61 à 66) sont des trous percés selon des axes de trou parallèles mutuels perpendiculaires à l'autre côté de bloc extérieur respectif associé.

4. Climatiseur selon la revendication 1,
**caractérisé en ce que** chacun desdits passages de connexion interne (72, 74) s'étend entre un trou de montage de vanne à solénoïde (42, 43) et un trou de montage de clapet anti-retour associé (51, 53), ledit trou de montage de vanne à solénoïde et ledit trou de montage de clapet anti-retour se faisant face l'un l'autre et étant formés en opposition aux côtés extérieurs du bloc (11).

5. Climatiseur selon la revendication 1,
**caractérisé en ce que** les passages de flux internes (61 à 66) sont des trous borgnes orientés de manière perpendiculaire par rapport à l'orientation des axes des trous de montage, chaque trou borgne coupant soit au moins un des trous de montage, soit l'un des passages de connexion internes.

6. Climatiseur selon la revendication 1,
**caractérisé en ce que** lesdits trous de montage de vanne à solénoïde (41 à 43) sont percés à l'intérieur du bloc (11) dans la même direction et avec une orientation parallèle à leur axe d'orifice à partir d'un premier côté extérieur du bloc (11), **en ce que** les trous de montage de clapet anti-retour (51 à 54) sont percés dans la même direction et avec une orientation parallèle à leurs axes de perçage à partir d'un autre côté extérieur dudit bloc (11) en opposition au premier côté extérieur, et **en ce que** les orifices de passage de fluide de réfrigération qui définissent lesdits passages de flux internes (61 à 66) sont percés de manière perpendiculaire aux dits deux trous de montage et en connexion avec lesdits passages de flux et lesdites connexions à l'intérieur dudit bloc (11).

7. Climatiseur selon la revendication 1,
**caractérisé en ce que** entre le passage de flux en retour de fluide de réfrigération (10) et le tube de réfrigération principal (8) et entre le passage en dérivation de flux de réfrigération (9) et le tube principal de réfrigération (8), il est formé des connexions (12, 13, 14, 15) à l'intérieur dudit bloc (11) par des intersections respectives communes entre l'un (62, 63, 64, 65) des passages de flux internes (61 à 66) et soit deux trous de montage adjacents (41, 42 ; 51, 52 ; 53, 54), soit un trou de montage (43) et un passage de connexion interne adjacent (73).

8. Climatiseur selon la revendication 1,
**caractérisé en ce que** lesdites vannes à solénoïde (21 à 23) comprennent une vanne à solénoïde (21) destinée à ouvrir / fermer le tube principal de réfrigération (8) en amont du condenseur principal (2), une vanne à solénoïde (22) destinée à ouvrir / fermer le passage de flux en dérivation (9), et une vanne à solénoïde (23) destinée à connecter / séparer le passage de débit en retour de fluide de réfrigération (10) et le tube principal de réfrigération (8).

9. Climatiseur selon la revendication 1,
**caractérisé en ce que** lesdits clapets anti-retour (31 à 34) comprennent un clapet anti-retour (31) monté dans le passage de flux de réfrigération en dérivation (9), un clapet anti-retour (32) monté dans le tube principal de flux de réfrigération (8) à proximité d'une sortie située en aval du condenseur principal (2), un clapet anti-retour (33) monté dans ledit passage de flux en retour de fluide de réfrigération (10), et un clapet anti-retour (34) monté dans le tube principal de fluide de réfrigération (8) à proximité d'une sortie située en aval de l'évaporateur (6).
